# EUROPÄISCHE PATENTANMELDUNG

(11) **EP 2 023 022 A2**
(43) Veröffentlichungstag der Anmeldung: **11.02.2009**
(21) Anmeldenummer: 08159717.1
(22) Anmeldetag: 04.07.2008
(51) Int. Cl.: F16H 63/20

(54) **Schaltungsanordnung zum Wählen und Schalten eines Ganges bei einem Handschaltgetriebe eines Fahrzeuges**

(30) Priorität: 09.08.2007 DE 102007037521
(71) Anmelder: ZF Friedrichshafen AG, 88038 Friedrichshafen (DE)
(72) Erfinder: Eisenberger, Dieter, 88693 Deggenhausertal (DE)

(57) **Zusammenfassung**

Es wird eine Schaltungsanordnung zum Wählen und Schalten eines Ganges bei einem Handschaltgetriebe eines Fahrzeuges mit einer Schalteinrichtung vorgeschlagen, die einen Schalthebel umfasst, der entlang eines H-Schaltbildes bewegbar ist, und der mit einer in einem Gehäuse (2) gelagerten Schaltwelle (1) gekoppelt ist, deren axiale und rotatorische Bewegungen den Wähl- und Schaltvorgang bei der Schalteinrichtung realisieren, wobei als Rückwärtsgangsperre zumindest ein von der Schaltwelle (1) betätigbares Führungselement vorgesehen ist, welches mit zumindest einem Sperrelement (3) zum unbeabsichtigten Schalten eines Rückwärtsganges und/oder eines Kriechganges in Wirkverbindung bringbar ist.

## Beschreibung

Die vorliegende Erfindung betrifft eine Schaltungsanordnung gemäß der im Oberbegriff des Patentanspruches 1 näher definierten Art.

Aus der Fahrzeugtechnik ist eine derartige Schaltungsanordnung zum Wählen und Schalten eines Ganges bei einem Handschaltgetriebe bekannt. Die bekannte Schaltungsanordnung umfasst als Rückwärtsgangsperre einen federbelasteten Riegel, der an der Schaltwelle angelegt ist. Um in die Rückwärtsgang-Schaltgasse zu gelangen, muss der Riegel über eine Rampe an der Schaltwelle geführt werden. Um den Riegel dazu anzuheben, ist eine bestimmte Entsperrkraft notwendig, die vom Fahrer aufgebracht werden muss. Das Kraftniveau der Entsperrkraft hängt davon ab, ob ein statischer oder dynamischer Wählvorgang vom Fahrer durchgeführt wird. Bei einem statischen Wählvorgang liegt der Riegel bewegungslos an der Rampe der Schaltwelle an. Somit ist ein großer Kraftaufwand notwendig, um die Rückwärtsgangsperre zu überwinden. Bei einem dynamischen Wählvorgang dagegen startet die Bewegung der Schaltwelle aus der 3/4-Schaltgasse. Somit trifft die Rampe mit einer gewissen Geschwindigkeit auf den Riegel und hebt diesen an. Infolgedessen ist beim dynamischen Wählvorgang ein nur geringer Kraftaufwand erforderlich.

Folglich kann ein unbeabsichtigtes Wählen in die Rückwärtsgang-Schaltgasse, insbesondere bei einem dynamischen Wählvorgang nicht ausgeschlossen werden. Dies kann zu starken Ratschgeräuschen im Getriebe führen und bei häufiger Fehlbedienung kann sogar ein Ausfall des Getriebes auftreten. Um dies zu verhindern, kann die Sperrkraft für die R-Gangsperre erhöht werden. Dies bewirkt allerdings, dass bei Schaltungen aus der 1/2-Schaltgasse in die R-Schaltgasse, also bei einem statischen Wählvorgang, deutlich höhere Entsperrkräfte aufgebracht werden müssen. Somit wird dadurch der Schaltkomfort negativ beeinflusst.

Beispielsweise aus der Druckschrift DE 195 11 510 C1 ist eine Nockenscheiben-Anordnung einer Schaltkulisse für eine Schaltvorrichtung eines Zahnräderwechselgetriebes bekannt. Bei der bekannten Schaltvorrichtung wird eine Sperrung der Rückwärtsgang-Schaltgasse durch eine verstellbare Nockenscheibe realisiert. Die Nockenscheiben kann zwischen einer die Rückwärtsgang-Schaltgasse sperrenden Grundstellung und einer Freigangstellung geschwenkt werden. Auch bei dieser bekannten Schaltvorrichtung ergibt sich das bereits angesprochene Problem der unterschiedlichen Kraftniveaus der Entsperrkraft bezüglich des statischen und dynamischen Wählens.

Die Druckschrift DE 10 2005 018 827 A1 offenbart eine andere Art der Rückwärtsgangsperre, bei der zwei aufeinander liegende Bleche in einem Getriebegehäuse gehalten sind, wobei das obere Blech gegenüber dem unteren Blech geführt ist, so dass das obere Blech ausschließlich in senkrechter Richtung zu der Ausrichtung der Rückwärtsgang-Schaltgasse verschiebbar ist. Das untere Blech bildet eine Schaltkulisse mit einem H-Schaltbild mit sechs Arbeitsgängen und einem Rückwärtsgang. In der Schaltkulisse ist ein bolzenartiger Schaltfinger geführt. Das obere Blech weist zwei Kerben auf, in die eine federbelastete Rastkugel eingerastet ist. Wenn die Rastkugel in die rechte Kerbe eingreift, wird das obere Blech in einer Stellung gehalten, in der die Rückwärtsgang-Schaltgasse freigegeben ist. Zum Sperren der Rückwärtsgang-Schaltgasse wird durch den Schaltfinger das obere Blech nach rechts verschoben. Dabei rastet die Rastkugel in der linken Kerbe ein. In dieser Stellung kann der Schaltfinger nicht mehr in die Rückwärtsgang-Schaltgasse gewählt werden. Somit ist die Rückwärtsgangsperre aktiv.

Schließlich beschreibt die Druckschrift DE 100 64 609 A1 eine weitere Schalteinrichtung eines Schaltgetriebes zum Wählen und Schalten von Gängen. Die Schalteinrichtung umfasst eine gehäuseseitig befestigte Kulisse, in deren Schaltbild ein an einer Schaltwelle befestigter Stift eingreift. Je nach Schalt- oder Wählstellung der Schaltwelle steht der Stift im Eingriff mit einer Führungsbahn in der Kulisse. Die senkrechten Führungsbahnen führen beim Schalten eines Ganges innerhalb einer Gasse und die waagerechte Führungsbahn führt beim Wählen der jeweiligen Gasse. Eine Rückwärtsgangsperre ist nicht vorgesehen.

Der vorliegenden Erfindung liegt die Aufgabe zu Grunde, eine Schaltungsanordnung der eingangs beschriebenen Gattung vorzuschlagen, bei der ein unbeabsichtigtes Schalten des Rückwärtsgangs beziehungsweise des Kriechgangs sicher verhindert wird und zudem der Unterschied bei der Entsperrkraft hinsichtlich eines statischen Wählvorganges und eines dynamischen Wählen möglichst gering ist.

Diese Aufgabe wird erfindungsgemäß durch die Merkmale des Patentanspruches 1 gelöst. Weitere Vorteile und mögliche Ausgestaltungen ergeben sich aus den Unteransprüchen und den Zeichnungen.

Demzufolge wird eine Schaltungsanordnung zum Wählen und Schalten eines Ganges bei einem Handschaltgetriebe eines Fahrzeuges vorgeschlagen, welche eine Schalteinrichtung umfasst, die von einem Schalthebel betätigbar ist, der entlang eines H-Schaltbildes oder dergleichen bewegbar ist und der mit einer in einem Gehäuse gelagerten Schaltwelle gekoppelt ist, deren axiale und rotatorische Bewegungen den Wähl- und Schaltvorgang bei einer Schalteinrichtung realisieren, wobei als Rückwärtsgangsperre zumindest ein von der Schaltwelle betätigbares Führungselement oder dergleichen vorgesehen ist, welches mit zumindest einem Sperrelement zum unbeabsichtigten Schalten des Rückwärtsganges und/oder des Kriechganges in Wirkverbindung bringbar ist. Das Sperrelement kann beispielsweise als Sperrhülse, Sperrscheibe oder dergleichen ausgebildet sein.

Auf diese Weise wird bei der erfindungsgemäßen Schaltungsanordnung das Wählverhalten optimiert und durch die vorgesehene Rückwärtsgangsperre die Möglichkeit des unbeabsichtigten Wählens des Rückwärtsgang und/oder des Kriechganges ausgeschlossen. Somit werden sicherheitskritische Fahrsituationen bei dem Fahrzeug verhindert. Aufgrund der Art und Weise der Rückwärtsgangsperre gibt es in vorteilhafter Weise keinen Unterschied mehr bezüglich des Kraftniveaus beim statischen und dynamischen Wählen, da nur noch ein statisches Wählen möglich ist. Ferner befindet sich das Sicherungssystem in der Schalteinrichtung selbst und ist somit gegen äußere Einflüsse, wie Toleranzen oder Elastizitäten in dem Übertragungssystem unempfindlich. Zudem sind keine Leitungen, Sensoren und Aktuatoren für die Rückwärtsgangsperre erforderlich.

Im Rahmen einer vorteilhaften Ausführungsvariante kann vorgesehen sein, dass das Sperrelement eine Führungsbahn oder dergleichen zum Führen des Führungselements mit zumindest einem Funktionsflächenabschnitt und zumindest eine Rastierstellung zum Sperren und Freigeben der Rückwärtsgang-Schaltgasse und/oder der Kriechgang-Schaltgasse aufweist. Somit werden die Wähl- und Schaltbewegungen der Schaltwelle durch das Zusammenwirken des Führungselements mit dem jeweiligen Funktionsflächenabschnitt sowie der Rastierstellung des Sperrelements derart begrenzt, das ein unbeabsichtigtes Wählen in die Rückwärtsgang-Schaltgasse und/oder in die Kriechgang-Schaltgasse verhindert wird.

Um eine gewünschte Schaltung in den Rückwärtsgang oder in den Kriechgang durchführen zu können, ist es erforderlich, das Sperrelement aus einer ersten Rastierstellung, bei der sich das Sperrelement in der Neutral-Stellung befindet, in eine zweite Rastierstellung zu verdrehen, bei der sich das Sperrelement in der Gang-ein-Stellung befindet. Somit ist der Fahrer gezwungen vor der Wahl des Rückwärtsganges oder des Kriechganges kurzzeitig den ersten beziehungsweise bei einem Getriebe mit einem Bereichsgruppengetriebe den fünften Vorwärtsgang anzuwählen, um auf diese Weise die Verdrehung des Sperrelements in die zweite Rastierstellung zu erreichen, so dass der Rückwärtsgang beziehungsweise der Kriechgang geschaltet werden kann. Durch das kurzzeitige Anwählen des ersten beziehungsweise fünften Vorwärtsganges wird das Getriebe über die Synchronisierung bis annähernd zum Stillstand gebremst. Der Rückwärtsgang beziehungsweise der Kriechgang kann somit problemlos, das heißt ohne Ratschen eingelegt werden. Dadurch werden Schäden an den Schalteinrichtungen verhindert. In vorteilhafter Weise wird durch die erfindungsgemäße Schaltungsanordnung auch ein Schalten aus höheren Gängen direkt in den Rückwärtsgang beziehungsweise in den Kriechgang ausgeschlossen.

Weiterhin kann beim Wählen in die Rückwärtsgang- bzw. Kriechgang-Schaltgasse ein Kraftanstieg der Wählkraft wirksam werden, der auf ein gewünschtes, definiertes Niveau ausgelegt werden kann. Dies ist beispielsweise durch eine zusätzliche Wählfeder realisierbar, die erst beim Wählen in die Rückwärtsgang- bzw. Kriechgang-Schaltgasse wirksam wird.

Beispielsweise kann gemäß einer Weiterbildung der Erfindung vorgesehen sein, dass die beiden Rastierstellungen an dem äußeren Umfang des Sperrelements vorgesehen sind. Es sind auch andere Anordnungsmöglichkeiten denkbar. Beispielsweise können die Rastierstellungen auch an einer Stirnseite oder am Innenumfang des Sperrelements vorgesehen sein.

Eine mögliche Ausgestaltung der Erfindung kann vorsehen, dass das Sperrelement drehbar in dem Gehäuse gelagert und axial abgestützt ist, so dass das Sperrelement über das in der Führungsbahn bewegbare Führungselement lediglich verdreht werden kann. Eine Bewegung des Sperrelements in axialer Richtung wird aufgrund der axialen Abstützung an dem Gehäuse verhindert.

Eine mögliche konstruktive Ausführungsform der Erfindung kann vorsehen, dass als Führungselement ein mit der Schaltwelle drehfest verbundenes Schlüsselblech oder dergleichen mit zumindest einem radial nach außen ausgerichteten stiftartigen Vorsprung oder dergleichen vorgesehen ist. Der Vorsprung wird in der Führungsbahn des Sperrelements durch entsprechende Bewegungen der Schaltwelle geführt. Durch eine Bewegung der Schaltwelle wird der Vorsprung mit einer als Funktionsflächenabschnitt ausgebildeten Anschlagfläche des Sperrelements in Kontakt gebracht, so dass die Bewegung der Schaltwelle dadurch in axialer Richtung begrenzt wird, solange sich das Sperrelement in der ersten Rastierstellung befindet. Es sind auch andere konstruktive Formen des Führungselements möglich. Beispielsweise kann das Führungselement auch als Querstift ausgebildet sein, der z.B. in einer Bohrung der Schaltwelle befestigt ist.

Bei einer möglichen Ausführungsvariante der Erfindung kann vorgesehen sein, dass die Funktionsflächenabschnitte entlang der Führungsbahn in der Mantelfläche des als Sperrhülse ausgebildeten Sperrelements vorgesehen sind. Es sind auch andere Anordnungsmöglichkeiten denkbar.

Zum Sperren der Rückwärtsgang-Schaltgasse und/oder der Kriechgang-Schaltgasse kann als Funktionsflächenabschnitt die bereits erwähnte Anschlagfläche vorgesehen sein. Bevorzugt ist die Anschlagfläche parallel zur Umfangrichtung des Sperrelements ausgerichtet, um somit die axiale Bewegung der Schaltwelle in die Rückwärtsgang-Schaltgasse und/oder Kriechgang-Schaltgasse zu verhindern.

Zum Wählen in die Rückwärtsgang-Schaltgasse und die Kriechgang-Schaltgasse ist es somit erforderlich, dass das Sperrelement durch Verdrehen in die zweite Rastierstellung zum Freigeben der Rückwärtsgang-Schaltgasse gebracht wird. Dazu ist gemäß einer nächsten Weiterbildung der Erfindung vorgesehen, dass die Führungsbahn eine Schaltfläche als Funktionsflächenabschnitt oder dergleichen aufweist, die bevorzugt parallel zur axialen Ausrichtung der Schaltwelle verläuft. Auf diese Weise kann durch Verdrehen der Schaltwelle auch das Sperrelement verdreht werden, um die zweite Rastierstellung zu erreichen. Es sind auch andere konstruktive Ausgestaltungen der Schaltfläche möglich.

Um bei freigegebener Rückwärtsgangsperre in die Rückwärtsgang-Schaltgasse wählen zu können, kann gemäß einer nächsten Ausgestaltung der Erfindung ein axialer Endbereich oder dergleichen an der Führungsbahn als Funktionsflächenabschnitt vorgesehen sein. Der Endbereich wird auch als Rückwärtsgang- beziehungsweise Kriechgang-Nut bezeichnet. Das Führungselement der Schaltwelle kann diesen Endbereich der Führungsbahn erst erreichen, wenn die Schaltwelle verdreht wird. Beim Verdrehen der Schaltwelle wird auch das Sperrelement verdreht, bis das Sperrelement die zweite Rastierstellung erreicht hat. Denn nur so kann die Anschlagfläche in der Führungsbahn umgangen werden.

Gemäß einer nächsten Weiterbildung der Erfindung kann vorgesehen sein, dass als weiterer Funktionsflächenabschnitt beispielsweise zum Rückstellen des Führungselements und zum Verstellen der Rastierstellungen an dem Sperrelement beim Auslegen des Rückwärtsganges oder des Kriechganges eine Steuerkante vorgesehen ist. Vorzugsweise kann die Steuerkante als Schräge mit vorbestimmter Steigung oder dergleichen ausgebildet sein. Es sind auch andere konstruktive Ausbildungen an der Führungsbahn denkbar.

Im Rahmen einer möglichen Ausführungsvariante bei der erfindungsgemäßen Schaltungsanordnung kann vorgesehen sein, dass die Rastierstellungen als erste Rastierausnehmung und als zweite Rastierausnehmung ausgebildet sind, mit denen wechselweise eine korrespondierende federbelastete Kugelraste in Formschluss bringbar ist. Durch den Formschluss zwischen der Kugelraste und der jeweiligen Rastierausnehmung wird die zugeordnete Rastierstellung zeitweise fixiert, so dass ein unbeabsichtigtes Verstellen der gewählten Rastierstellung nicht möglich ist.

Vorzugsweise kann die Kugelraste in einer Ausnehmung oder dergleichen des Gehäuses angeordnet sein. Es sind auch andere Anordnungsmöglichkeiten denkbar.

Eine weitere vorteilhafte Ausgestaltung der vorliegenden Erfindung kann vorsehen, dass zumindest zwei Kugelrasten vorgesehen sind, welche z.B. in einem Winkel von 180° zueinander versetzt angeordnet sind. Dies setzt voraus, dass auch zumindest ein zweites Paar Rastierausnehmungen an dem Sperrelement vorgesehen ist. Auch die beiden Paare der Rastierausnehmungen sind hierbei in einem Winkel von etwa 180° zueinander versetzt angeordnet. Es sind auch andere Winkel möglich. Die Rastierausnehmungen können in einem geringfügig anderen Winkel angeordnet sein. Dadurch können vielfältigere Steuerfunktionen gestaltet werden, weil eine Unabhängigkeit von der einen Rastierausnehmung bzw. Rastierfunktion zur anderen gegeben ist.

Ebenso kann es vorgesehen sein, dass das Schlüsselblech zumindest zwei Vorsprünge aufweist, welche in einem Winkel von etwa 180° zueinander versetzt angeordnet sind. Auch hier wird vorausgesetzt, dass das Sperrelement zumindest zwei Führungsbahnen aufweist, welche in einem Winkel von etwa 180° zueinander versetzt angeordnet sind. Dadurch können die von dem Vorsprung auf das Sperrelement wirkenden Momente und Kräfte ausgeglichen werden, so dass keine einseitigen Belastungen an dem Sperrelement und dem Schlüsselblech auftreten. Auch hier können andere Winkel zur Anordnung der Vorsprünge und der Führungsbahnen verwendet werden.

Das Wählkraftniveau zum Wählen in die Rückwärtsgang-Schaltgasse oder in die Kriechgang-Schaltgasse kann auf jede beliebige Höhe ausgelegt werden. Mit besonderem Vorteil bleibt dieses über die gesamte Lebensdauer und bei allen Betriebsbedingungen annähernd konstant.

Mit der erfindungsgemäßen vorgeschlagenen Schaltungsanordnung wird auch das dieser Anordnung zu Grunde liegende Verfahren beansprucht.

Nachfolgend wird die vorliegende Erfindung anhand der Zeichnungen näher erläutert. Es zeigen:
- Fig. 1: eine schematische, dreidimensionale Teilansicht eines möglichen Ausführungsbeispiels einer erfindungsgemäßen Schaltungsanordnung;
- Fig. 2: eine teilgeschnittene, dreidimensionale Ansicht der Schaltungsanordnung gemäß Fig. 1;
- Fig. 3: eine vergrößerte dreidimensionale Ansicht der Schaltungsanordnung gemäß Fig. 1;
- Fig. 4: eine Prinzipdarstellung der Schaltungsanordnung mit einer Schaltwelle in Neutral im Bereich der 3/4-Schaltgasse und einer Sperrhülse in Neutral;
- Fig. 5: eine Prinzipdarstellung der Schaltungsanordnung mit der Schaltwelle in Neutral im Bereich der 1/2-Schaltgasse und der Sperrhülse in Neutral;
- Fig. 6: eine Prinzipdarstellung der Schaltungsanordnung mit der Schaltwelle in Neutral im Bereich der 1/2-Schaltgasse ohne Rückwärtsgangsperre;
- Fig. 7: eine Prinzipdarstellung der Schaltungsanordnung mit der Schaltwelle in Neutral im Bereich der Rückwärtsgang-Schaltgasse und
- Fig. 8: ein Diagramm mit verschiedenen Wählkraftverläufen über dem Wählweg.

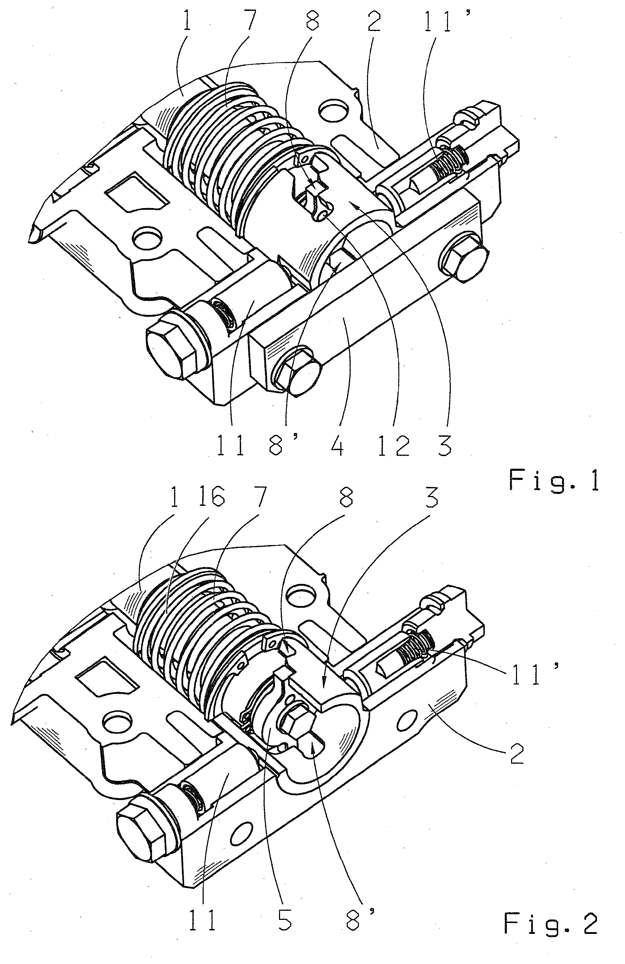

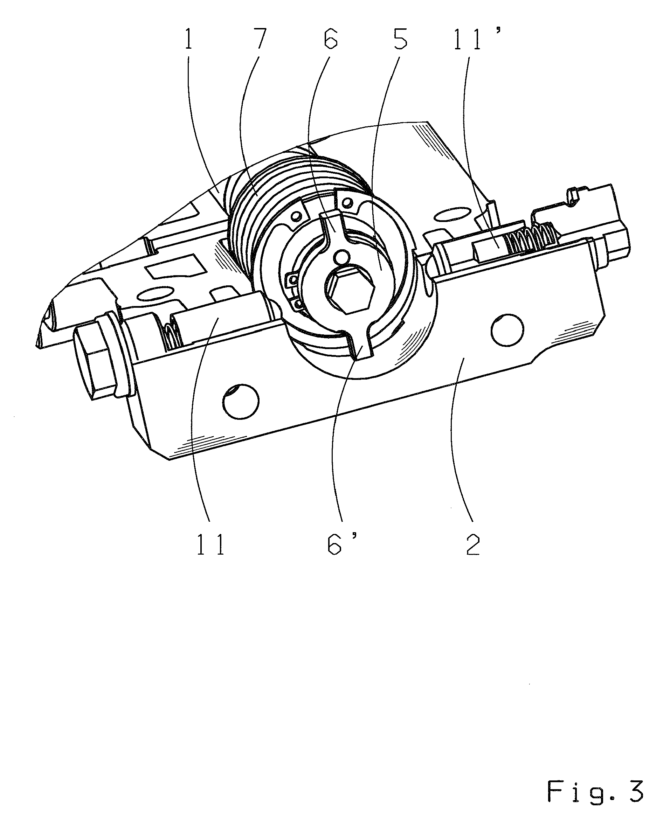

In den Fig. 1 bis 3 ist ein mögliches Ausführungsbeispiel einer erfindungsgemäßen Schaltungsanordnung zum Wählen und Schalten eines Ganges bei einem nicht weiter dargestellten Handschaltgetriebe eines Fahrzeuges gezeigt, wobei lediglich die für die Erfindung relevanten Bauteile dargestellt und beschrieben werden. Die in den Fig. 1 bis 3 dargestellten Ansichten unterscheiden sich insbesondere dadurch, dass in den Fig. 2 und 3 verschiedene Bauteile zur besseren Übersichtlichkeit ausgeblendet sind.

Die erfindungsgemäße Schaltungsanordnung umfasst eine nicht weiter dargestellte Schalteinrichtung mit Schaltelementen, die über einen Schalthebel und über eine Schaltwelle 1 betätigt werden können, wobei der Schalthebel entlang eines H-Schaltbildes beziehungsweise eines überlagerten H-Schaltbildes bewegbar ist. Der Schalthebel ist mit der in einem Gehäuse 2 gelagerten Schaltwelle 1 gekoppelt. Die Schaltwelle 1 kann axial und rotatorisch bewegt werden, um den Wähl- und Schaltvorgang bei der Schalteinrichtung zu realisieren. Die Schaltwelle 1 ist über ein Federelement 7 in axialer Richtung in dem Gehäuse gefedert angeordnet, so dass sich der Schalthebel und die Schaltwelle 1 in ihrer Ausgangsstellung in der 3/4-Schaltgasse befinden.

Als Rückwärtsgangsperre ist bei der vorgeschlagenen Schaltungsanordnung ein von der Schaltwelle 1 betätigbares Führungselement 5 vorgesehen, welches mit einer Sperrhülse 3 zum unbeabsichtigten Schalten eines Rückwärtsganges und/oder eines Kriechganges in Wirkverbindung bringbar ist.

Dazu ist die Sperrhülse 3 koaxial zur Schaltwelle 1 angeordnet. Die Sperrhülse 3 ist drehbar in dem Gehäuse 2 gelagert und stützt sich axial gegen einen Deckel 4 des Gehäuses 2 ab. Der Deckel 4 ist an das Gehäuse 2 angeschraubt, wie in Fig. 1 gezeigt. Das Führungselement ist als Schlüsselblech 5 ausgebildet, welches drehfest mit der Schaltwelle 1 verbunden ist, das insbesondere in Fig. 3 dargestellt ist. Das Schlüsselblech 5 weist zwei radial nach außen gerichtete stiftartige Vorsprünge 6, 6' auf, die hier in einem Winkel von 180° zueinander versetzt angeordnet sind.

Die Wirkverbindung zwischen der Schaltwelle 1 beziehungsweise dem Schlüsselblech 5 einerseits und der Sperrhülse 3 andererseits wird durch eine Führungsbahn 8 zum Führen des Vorsprungs 6 des Schlüsselblechs 5 realisiert. Bei dem dargestellten Ausführungsbeispiel sind zwei Führungsbahnen 8, 8' an der Mantelfläche der Sperrhülse 3 angeordnet, welche in einem Winkel von etwa 180° zueinander versetzt sind.

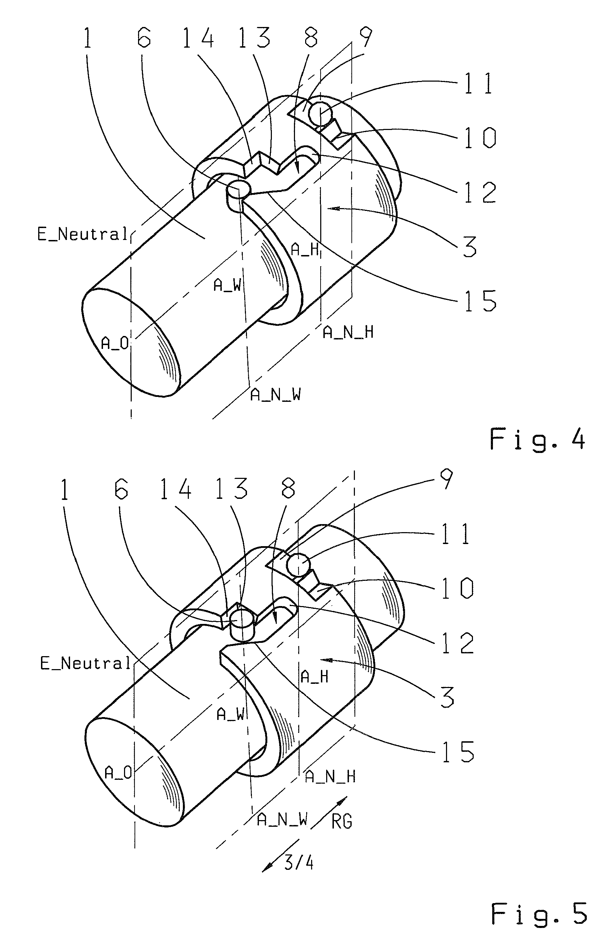

Jede Führungsbahn 8, 8' weist mehrere Funktionsflächenabschnitte auf, an denen der jeweilige Vorsprung 6, 6' des Schlüsselblechs 5 entlang geführt wird. Ferner sind zwei Rastierstellungen zum Sperren und Freigeben der Rückwärtsgang-Schaltgasse bzw. der Kriechgang-Schaltgasse an der Sperrhülse 3 vorgesehen. Die beiden Rastierstellungen werden durch eine erste Rastierausnehmung 9 und eine zweite Rastierausnehmung 10 an der Mantelfläche der Sperrhülse 3 gebildet (siehe Fig. 4 bis 7). Die erste Rastierausnehmung 9 entspricht der Neutral-Stellung der Sperrhülse 3 und die zweite Rastierausnehmung 10 entspricht der Gang-ein-Stellung der Sperrhülse 3. Bei dem gezeigten Ausführungsbeispiel ist ein zweites Paar Rastierausnehmungen an der Sperrhülse 3 vorgesehen, die in einem Winkel von etwa 180° zueinander versetzt angeordnet sind. Dies ist in den Figuren nicht weiter dargestellt.

Um die jeweilige Rastierstellung zu fixieren, sind an dem Gehäuse 2 mit den Rastierausnehmungen 9, 10 korrespondierende und federbelastete Kugelrasten 11, 11' angeordnet. Die Kugelrasten 11, 11' sind jeweils wechselseitig mit einer der Rastierausnehmung 9 oder 10 in Formschluss bringbar, um eine gewünschte Rastierstellung zu halten. Auch die Kugelrasten 11, 11' sind hier in einem Winkel von 180° zueinander versetzt in dem Gehäuse 2 angeordnet.

In den Fig. 4 bis 7 sind jeweils Prinzipdarstellungen der erfindungsgemäßen Schaltungsanordnung mit der Schaltwelle 1 in verschiedenen Wählstellungen gezeigt, wobei die gleichen Bauteile wie in den Fig. 1 bis 3 vorgesehen sind, welche jedoch nur schematisch angedeutet sind, aber mit den gleichen Bezugszeichen wie in den Fig. 1 bis 3 bezeichnet sind. Der Vorsprung 6 ist in den Fig. 4 bis 7 als Stift ausgebildet, der in einer Bohrung der Schaltwelle befestigt ist. Anhand dieser Prinzipdarstellungen wird die Funktionsweise der Rückwärtsgangsperre näher erläutert.

In Fig. 4 ist die Schaltwelle 1 in der Neutral-Stellung im Bereich der 3/4-Schaltgasse angeordnet und die Sperrhülse 3 befindet sich ebenfalls in der Neutral-Stellung. Dies entspricht der ersten Rastierausnehmung 9 an der Sperrhülse 3, wobei diese Rastierstellung durch die Kugelraste 11 gehalten wird. In der Neutral-Position ist eine in der Führungsbahn 8, 8' als axialer Endbereich 12 ausgebildete Rückwärtsgang-Nut oder Kriechgang-Nut um etwa 15° tangential aus der Neutralebene E_NEUTRAL heraus geschwenkt. Ferner ist die Neutralachse der Schaltwelle 1 mit A_N_W und die Neutralachse der Sperrhülse 3 mit A_N_H bezeichnet sowie die Achse der Sperrhülse 3 mit AH und die Achse der Schaltwelle 1 mit AW bezeichnet.

Bei einem Gassenwechsel von der 3/4-Schaltgasse in die 1/2-Schaltgasse wird eine axiale Bewegung der Schaltwelle 1 vorgesehen, so dass der Vorsprung 6 gegen eine als Funktionsflächenabschnitt ausgebildete Anschlagfläche 13 in der Führungsbahn 8 der Sperrhülse 3 anschlägt beziehungsweise geführt wird. Somit ist ein Gassenwechsel in die Rückwärtsgang-Schaltgasse nicht möglich, wie in Fig. 5 gezeigt, da in dieser Stellung die Rückwärtsgangsperre aktiv ist. Die axialen Bewegungen der Schaltwelle 1 in Richtung Rückwärtsgang und in Richtung 3/4-Schaltgasse sind durch Pfeile in Fig. 5 angedeutet.

Um die Rückwärtsgangsperre aufzuheben und ein Wählen und Schalten des Rückwärtsganges zu ermöglichen, ist es erforderlich, dass der erste Vorwärtsgang beziehungsweise bei einem Getriebe mit einem Bereichsgruppengetriebe der fünfte Vorwärtsgang kurz angewählt wird, wodurch der Vorsprung 6 an eine als Funktionsflächenabschnitt ausgebildete Schaltfläche 14 anschlägt. Dadurch wird die Sperrhülse 3 soweit verdreht, dass die Kugelraste 11 in die zweite Rastierausnehmung 10 bewegt wird, so dass sich die Sperrhülse 3 in der Gang-ein-Rastierstellung befindet, welches der zweiten Rastierausnehmung 10 entspricht.

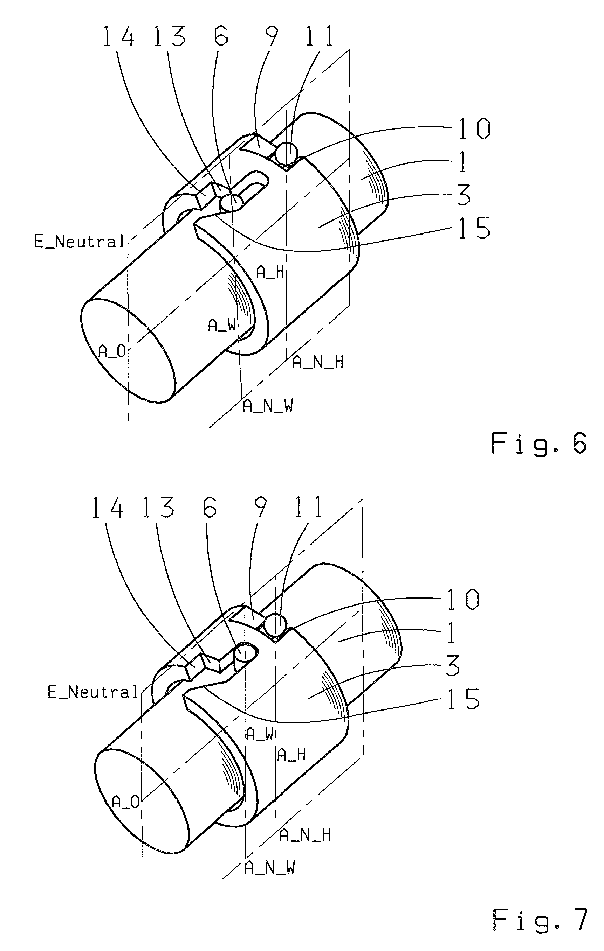

Nach dem Rückschalten der Schaltwelle 1 in die Neutral-Stellung ist das Wählen in die Rückwärtsgang-Schaltgasse beziehungsweise in die Kriechgang-Schaltgasse freigegeben, welches in Fig. 6 gezeigt ist. Eine zusätzliche Erschwerung gegen unbeabsichtigtes Wählen des Rückwärtsganges beziehungsweise des Kriechganges kann durch eine zusätzliche Wählfeder 16 erfolgen, die erst beim Wählbeginn in die Rückwärtsgang- bzw. Kriechgang-Schaltgasse wirksam wird (siehe Fig. 2).

In Fig. 7 ist schließlich die Rückwärtsgang-Schaltgasse beziehungsweise die Kriechgang-Schaltgasse erreicht und durch Verdrehen der Schaltwelle 1 kann dann je nach Drehrichtung der Schaltwelle 1 der Rückwärtsgang oder der Kriechgang geschaltet werden.

Aus der in Fig. 6 dargestellten Position kann auch in den zweiten Vorwärtsgang geschaltet werden, wobei sich dabei die Sperrhülse 3 in die erste Rastierausnehmung 9 zurück bewegt, da der Vorsprung 6 an einer als Funktionsflächenabschnitt ausgebildeten Steuerkante 15 anschlägt. In diesem Zustand wird die Rückwärtsgangsperre durch nicht weiter dargestellte Mitnehmerzungen und Schaltschienen der Schalteinrichtung realisiert.

Die als Schräge ausgebildete Steuerkante 15 dient ferner dazu die Sperrhülse 3 nach dem Herausnehmen des Rückwärtsganges beziehungsweise des Kriechganges und anschließendem Bewegen der Schaltwelle 1 in die 3/4-Schaltgasse wieder in ihre Sperrstellung zurückzustellen, dies entspricht der ersten Rastierausnehmung 9, in der sich dann die Sperrhülse 3 befindet. Hiermit ist gewährleistet, dass die Sperrhülse 3 sofort in Sperrstellung gedreht wird, wenn der Vorsprung 6 in die 3/4-Schaltgasse bewegt wird.

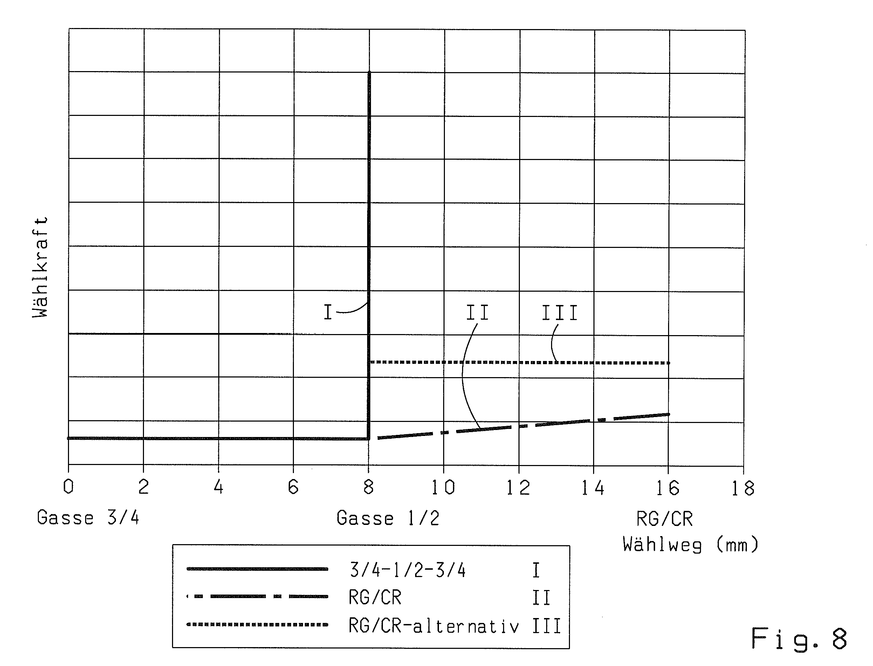

In Fig. 8 ist ein Diagramm dargestellt, in dem mehrere Wählkraftverläufen idealisiert über den Wählweg dargestellt sind. Der durchgezogene Verlauf I entspricht dem Verlauf der Wählkraft die zunächst aufgebracht werden muss, um von der 3/4-Schaltgasse in die 1/2-Schaltgasse zu gelangen. Aus dem Verlauf ist zu erkennen, dass hierbei zunächst eine nahezu konstante, niedrige Kraft erforderlich ist. Durch den senkrechten Anstieg des Verlaufes I soll verdeutlicht werden, dass das Wählen der Rückwärtsgang-Schaltgasse unüberwindlich ist, da die erforderliche Wählkraft quasi ins unendliche ansteigt.

Der strichpunktierte Verlauf II zeigt den Wählkraft-Verlauf beim erlaubten Wählen der Rückwärtsgang-Schaltgasse. Aus diesem Verlauf ist ersichtlich, dass dazu eine ansteigende Wählkraft erforderlich ist. Das Kraftniveau beim Wählen von der 1/2-Schaltgasse in die Rückwärtsgang- bzw. Kriechgang-Schaltgasse liegt somit entsprechend höher als das Kraftniveau beim Wählen von der 3/4-Schaltgasse in die 1/2-Schaltgasse, was von einem Fahrzeugführer beim Wählen in die entsprechende Schaltgasse wahrgenommen wird.

Schließlich zeigt der Verlauf III einen alternativen Wählkraft-Verlauf zum Wählen der Rückwärtsgang-Schaltgasse, der anfangs ein bestimmtes Wählkraftniveau erfordert und dann konstant weiter verläuft. Dieser Verlauf III kann beispielsweise durch die Verwendung einer zusätzlichen Wählfeder realisiert werden.

### Bezugszeichen

- 1: Schaltwelle
- 2: Gehäuse
- 3: Sperrhülse, Sperrelement
- 4: Deckel
- 5: Schlüsselblech
- 6, 6': Vorsprung
- 7: Federelement
- 8, 8': Führungsbahn
- 9: erste Rastierausnehmung
- 10: zweite Rastierausnehmung
- 11, 11': Kugelraste
- 12: axialer Endbereich
- 13: Anschlagfläche
- 14: Schaltfläche
- 15: Steuerkante
- 16: Federelement

- A_N_W: Neutralachse der Schaltwelle
- A_N_H: Neutralachse der Sperrhülse
- E_NEUTRAL: Neutralebene
- AH: Achse der Sperrhülse
- AW: Achse der Schaltwelle

## Patentansprüche

1. Schaltungsanordnung zum Wählen und Schalten eines Ganges bei einem Handschaltgetriebe eines Fahrzeuges, mit einer Schalteinrichtung, die einen Schalthebel umfasst, der entlang eines H-Schaltbildes bewegbar ist, und der mit einer in einem Gehäuse (2) gelagerten Schaltwelle (1) gekoppelt ist, deren axiale und rotatorische Bewegungen den Wähl- und Schaltvorgang bei der Schalteinrichtung realisieren, **dadurch gekennzeichnet, dass** als Rückwärtsgangsperre zumindest ein von der Schaltwelle (1) betätigbares Führungselement vorgesehen ist, welches mit zumindest einem Sperrelement (3) zum unbeabsichtigten Schalten eines Rückwärtsganges und/oder eines Kriechganges in Wirkverbindung bringbar ist.

2. Schaltungsanordnung nach Anspruch 1, **dadurch gekennzeichnet, dass** das Sperrelement (3) zumindest eine Führungsbahn (8) zum Führen des Führungselements mit zumindest einem Funktionsflächenabschnitt und zumindest eine Rastierstellung zum Sperren und Freigeben der Rückwärtsgang-Schaltgasse und/oder der Kriechgang-Schaltgasse aufweist.

3. Schaltungsanordnung nach Anspruch 2, **dadurch gekennzeichnet, dass** eine erste Rastierstellung, bei der das Sperrelement (3) in der Neutral-Stellung ist, und eine zweite Rastierstellung, bei der das Sperrelement (3) in der Gang-ein-Stellung ist, an dem äußeren Umfang des Sperrelements (3) vorgesehen sind.

4. Schaltungsanordnung nach einem der vorangehenden Ansprüche, **dadurch gekennzeichnet, dass** das Sperrelement (3) drehbar in dem Gehäuse (2) gelagert und axial abgestützt ist, so dass das Sperrelement (3) über das in der Führungsbahn (8) bewegbare Führungselement verdrehbar ist.

5. Schaltungsanordnung nach einem der Ansprüche 2 bis 4, **dadurch gekennzeichnet, dass** als Funktionsflächenabschnitt zum Sperren der Rückwärtsgang-Schaltgasse und/oder der Kriechgang-Schaltgasse eine Anschlagfläche (13) vorgesehen ist.

6. Schaltungsanordnung nach Anspruch 5, **dadurch gekennzeichnet, dass** die Anschlagfläche (13) parallel zur Umfangrichtung des Sperrelements (3) ausgerichtet ist.

7. Schaltungsanordnung nach einem der Ansprüche 2 bis 6, **dadurch gekennzeichnet, dass** als Funktionsflächenabschnitt eine Schaltfläche (14) zum Freigeben der Rückwärtsgang-Schaltgasse und/oder der Kriechgang-Schaltgasse vorgesehen ist.

8. Schaltungsanordnung nach Anspruch 7, **dadurch gekennzeichnet, dass** die Schaltfläche (14) zum Verstellen der Rastierstellung an dem Sperrelement (3) parallel zur axialen Ausrichtung der Schaltwelle (1) ausgerichtet ist.

9. Schaltungsanordnung nach einem der Ansprüche 2 bis 8, **dadurch gekennzeichnet, dass** zum Schalten des Rückwärtsganges und/oder des Kriechganges ein axialer Endbereich (12) der Führungsbahn (8, 8') als Funktionsflächenabschnitt vorgesehen ist.

10. Schaltungsanordnung nach einem der Ansprüche 2 bis 9, **dadurch gekennzeichnet, dass** als weiterer Funktionsflächenabschnitt eine Steuerkante (15) zur Rückstellung des Sperrelements (3) in die erste Rastierstellung zum Sperren der Rückwärtsgang-Schaltgasse und/oder der Kriechgang-Schaltgasse vorgesehen ist.

11. Schaltungsanordnung nach Anspruch 10, **dadurch gekennzeichnet, dass** die Steuerkante (15) als Schräge ausgebildet ist.

12. Schaltungsanordnung nach einem der Ansprüche 2 bis 11, **dadurch gekennzeichnet, dass** die Rastierstellungen als erste Rastierausnehmung (9) und als zweite Rastierausnehmung (10) ausgebildet sind, mit denen wechselweise eine korrespondierende federbelastete Kugelraste (11, 11') in Formschluss bringbar ist

13. Schaltungsanordnung nach Anspruch 12, **dadurch gekennzeichnet, dass** die Kugelraste (11, 11') in dem Gehäuse (2) angeordnet ist.

14. Schaltungsanordnung nach Anspruch 12 oder 13, **dadurch gekennzeichnet, dass** zwei Kugelrasten (11, 11') vorgesehen sind, welche in einem Winkel von etwa 180° zueinander versetzt angeordnet sind.

15. Schaltungsanordnung nach einem der Ansprüche 12 bis 14, **dadurch gekennzeichnet, dass** ein zweites Paar Rastierausnehmungen vorgesehen sind, die in einem Winkel von etwa 180° zueinander versetzt angeordnet sind.

16. Schaltungsanordnung nach wenigstens einem der vorangehenden Ansprüche, **dadurch gekennzeichnet, dass** als Führungselement ein mit der Schaltwelle (1) drehfest verbundenes Schlüsselblech (5) mit zumindest einem radial nach außen ausgerichteten stiftartigen Vorsprung (6, 6') vorgesehen ist.

17. Schaltungsanordnung nach Anspruche 16, **dadurch gekennzeichnet, dass** das Schlüsselblech (5) zwei Vorsprünge (6, 6') aufweist, welche in einen Winkel von etwa 180° zueinander versetzt angeordnet sind.

18. Schaltungsanordnung nach einem der Ansprüche 2 bis 17, **dadurch gekennzeichnet, dass** das Sperrelement (3) zwei Führungsbahnen (8, 8') aufweist, welche in einem Winkel von etwa 180° zueinander versetzt angeordnet sind.

19. Schaltungsanordnung nach wenigstens einem der vorangegangenen Ansprüche, **dadurch gekennzeichnet, dass** das Sperrelement (3) als Sperrhülse ausgebildet ist.

20. Schaltungsanordnung nach Anspruch 19, **dadurch gekennzeichnet, dass** die Funktionsflächenabschnitte entlang der Führungsbahn (8, 8') in der Mantelfläche der Sperrhülse (3) vorgesehen sind.
